# DEMANDE DE BREVET EUROPEEN

(11) **EP 4 752 560 A1**
(43) Date de publication de la demande: **03.06.2026**
(21) Numéro de dépôt: 25219454.3
(22) Date de dépôt: 28.11.2025
(51) Int. Cl.: G01P 5/14, B64F 5/60, G01P 21/02, B64D 43/02, G01C 23/00

(54) **PROCÉDÉ DE VALIDATION DE MESURES AÉRODYNAMIQUES ET DISPOSITIF DE VALIDATION ASSOCIÉ**

(30) Priorité: 29.11.2024 FR 2413213
(71) Demandeur: THALES, 92190 Meudon (FR)
(72) Inventeur: BONEL, Roland, 26000 Valence (FR); PINEAU, Jean-Philippe, 41102 Vendome Cedex (FR)
(74) Mandataire: Lavoix

(57) **Abrégé**

La présente invention concerne un procédé de validation de mesures aérodynamiques mis en œuvre par une architecture comprenant N voies de mesure séparées comprenant chacune Pm sondes, comprenant les étapes suivantes :
- acquisition (110) d'une mesure élémentaire de chaque sonde ;
- pour chaque voie de mesure, détermination (120) d'une mesure résultante à partir des sondes appartenant à cette voie ;
- comparaison (130) des mesures résultantes :
+ lorsque les mesures résultantes sont cohérentes, validation (140) des mesures ;
+ lorsqu'une mesure résultante relative à la voie k est incohérente :
- sélection (170) d'une voie mesure i ;
- détermination (180) de Pi+Pk valeurs de cohérence ;
- détermination (190) d'une valeur incohérente parmi l'ensemble des valeurs de cohérence ;
- invalidation (200) de toute mesure élémentaire issue de la sonde correspondant à la valeur incohérente.

## Description

La présente invention concerne un procédé de validation de mesures aérodynamiques.

La présente invention concerne également un dispositif de validation mettant en œuvre un tel procédé.

Le domaine de l'invention est celui des systèmes critiques dits « Air Data » (« Données sur l'air », en français), et notamment de supervision et de sécurité (« safety » en anglais) de tels systèmes.

Depuis de nombreuses années, les architectures des systèmes critiques Air Data permettent de calculer les pressions statiques et les paramètres secondaires associés en faisant une moyenne entre pressions captées par les sondes passives situées de chaque côté (droite/gauche) des aéronefs. Cette moyenne permet de prendre en compte directement les effets du dérapage, et est historiquement faite d'une façon pneumatique en utilisant des tuyaux reliés à une unique électronique de mesure contenue dans un calculateur souvent nommé Air Data Unit (ADU) contenant un unique capteur de pression et l'électronique associée.

Les sondes numériques, apparues plus récemment, ont l'avantage de réduire (voire supprimer) les tuyaux mais ont l'inconvénient d'augmenter le nombre de capteurs et d'électroniques associées (qu'on nommera « Air Data Electronic Mesurement », ADEM) nécessaires au calcul d'une moyenne de pression statique droite/gauche.

En particulier, les sondes numériques requièrent généralement au moins deux ADEM pour réaliser un calcul de moyenne là où dans les architectures plus anciennes, un seul ADU suffisait.

En effet, dans les architectures plus anciennes à sondes passives (sans électronique de mesure dans la sonde), le capteur, permettant de calculer la pression statique, mesure, dans les faits, la moyenne pneumatique droite/gauche recueillie par les deux sondes passives, ce qui, physiquement, correspond à moyenner les pressions des deux côtés de l'aéronef et de prendre ainsi en compte les effets perturbateurs du dérapage. Ainsi, un ADU par voie de mesure suffisait.

Dans les architectures numériques, les sondes disposent localement de l'électronique nécessaire au calcul de la pression statique, de ce fait, elles mesurent les pressions droite et gauche indépendamment, à ce titre elles doivent intégrer chacune un capteur et l'électronique associée (ADEM), ce qui, a minima, double le nombre d'ADEM par rapport aux systèmes antérieurs à sondes « passives ». Cela oblige par calcul à moyenner les mesures de pression d'un côté et de l'autre de l'aéronef. Ainsi, au moins deux ADEM par voie de mesure sont nécessaires. Par exemple, dans un tel cas, étant donné qu'il s'agit un système critique, au moins trois voies de mesure comprenant chacune au moins deux ADEM sont nécessaires. Cela ramène à 6 le nombre total d'ADEM nécessaires.

On conçoit alors que l'utilisation des sondes numériques conduit à l'augmentation de leur nombre en comparaison avec la solution pneumatique. Cela diminue donc les avantages des sondes numériques.

La présente invention a pour but de remédier à cet inconvénient des sondes numériques. En particulier, la présente invention a pour but de proposer une solution permettant d'exploiter les sondes numériques tout en diminuant le nombre nécessaire de celles-ci pour le fonctionnement avec un système critique.

À cet effet, l'invention a pour objectif un procédé de validation de mesures aérodynamiques mis en œuvre par une architecture de mesure aéronautique embarquée au moins partiellement dans un aéronef et comprenant N voies de mesure séparées, chaque voie de mesure comprenant Pm sondes, l'indice m variant de 1 à N, le procédé comprenant les étapes suivantes :
- acquisition d'une mesure élémentaire de chaque sonde ;
- pour chaque voie de mesure, détermination d'une mesure résultante à partir des mesures élémentaires des sondes appartenant à cette voie de mesure ;
- comparaison des mesures résultantes entre elles :
   + lorsque les mesures résultantes sont cohérentes entre elles, validation de l'ensemble des mesures élémentaires ;
   + lorsqu'une mesure résultante relative à la voie k est incohérente avec les autres mesures résultantes :
- sélection d'une voie mesure i dont le nombre de sondes Pi est égal à au moins 2 ;
- détermination de Pi+Pk valeurs de cohérence, chaque valeur de cohérence étant déterminée par une fonction de cohérence sur un sous-ensemble de mesures élémentaires des sondes des voies i et k excluant la mesure élémentaire relative à l'une des sondes appartenant à l'une des voies ;
- détermination d'une valeur incohérente parmi l'ensemble des valeurs de cohérence, ladite valeur incohérente étant calculée sur le sous-ensemble de mesures élémentaires excluant la mesure élémentaire relative à la sonde j ;
- invalidation de toute mesure élémentaire issue de la sonde j.

Suivant d'autres aspects avantageux de l'invention, le procédé comprend une ou plusieurs des caractéristiques suivantes, prises isolément ou suivant toutes les combinaisons techniquement possibles :
- le procédé comprenant en outre une étape d'analyse de cohérence des mesures élémentaires entre elles, issues des sondes de la voie k lorsque le nombre de sondes Pk dans cette voie k est strictement supérieur à 2 ;
- la fonction de cohérence est définie préalablement en fonction d'au moins un paramètre choisi dans le groupe comprenant :
   - vitesse de l'aéronef ;
   - forme de l'aéronef ;
   - configuration aérodynamique de l'aéronef ;
   - placement des sondes correspondantes ;
   - nature des sondes correspondantes.
- les sondes d'une même voie de mesure sont disposées de côtés différents de l'aéronef ;
- chaque voie de mesure m comprend Pm/2 sondes disposées d'un côté de l'aéronef et Pm/2 sondes disposées de l'autre côté de l'aéronef ;
- chaque sonde est une sonde de pression statique ;
- la fonction de cohérence est définie en fonction des lois SSEC (de l'anglais « Static Source Error Correction ») des sondes correspondantes ;
- l'ensemble des sondes sont de même nature ;
- N=2 et Pm=2 pour tout indice m.

L'invention concerne également un programme d'ordinateur comportant des instructions logicielles qui, lorsqu'elles sont exécutées par un ordinateur, mettent en œuvre le procédé tel que défini ci-dessus.

L'invention a également pour objet un dispositif de validation comprenant des moyens techniques configurés pour mettre en œuvre le procédé tel que défini ci-dessous.

L'invention apparaîtra plus clairement à la lecture de la description qui va suivre, donnée uniquement à titre d'exemple non limitatif, et faite en référence aux dessins dans lesquels :
- [Fig. 1] la figure 1 est une vue schématique d'une architecture de mesure aéronautique, l'architecture comprenant un dispositif de validation selon l'invention ;
- [Fig. 2] la figure 2 est une vue schématique détaillée du dispositif de validation de la figure 1 ; et
- [Fig. 3] la figure 3 est un organigramme d'un procédé de validation selon l'invention, le procédé étant mis en œuvre par le dispositif de validation de la figure 2.

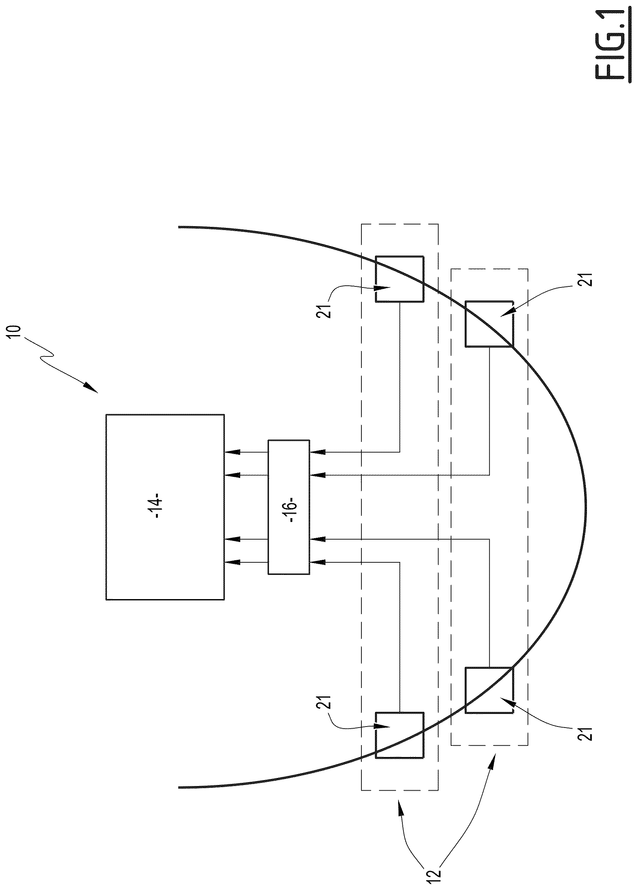

La figure 1 illustre une architecture de mesure aéronautique 10. Cette architecture 10 est avantageusement embarquée au moins partiellement dans un aéronef.

Par aéronef, on entend tout engin pilotable ou télé-pilotable ou autonome qui est apte à se déplacer dans les airs. En particulier, un aéronef peut correspondre à un avion ou à un hélicoptère ou un drone. L'aéronef peut être pilotable par un pilote à partir d'un cockpit de celui-ci et/ou par tout autre opérateur à partir d'un centre de pilotage distant.

En référence à la figure 1, l'architecture de mesure aéronautique 10 comprend N voies de mesure 12, un système de traitement 14 et un dispositif de validation 16.

Les voies de mesure 12 sont indépendantes entre elles et permettent de fournir des mesures aérodynamiques, telles que la pression statique, de manière indépendante.

En particulier, chaque voie de mesure 12 comprend Pm sondes 21, l'indice m variant de 1 à N. Chaque nombre Pm est supérieur ou égal à 1.

Chaque sonde 21 présente une sonde numérique permettant de fournir une mesure aérodynamique, telle que la pression statique, sous la forme d'une valeur numérique. Pour ce faire, chaque sonde 21 est avantageusement disposée à l'extérieur de l'aéronef. Chaque sonde 21 est par exemple fixée sur le fuselage de l'aéronef.

Les sondes 21 d'une même voie de mesure 12 sont avantageusement disposées des côtés différents de l'aéronef. Par exemple, Pm/2 sondes 21 de chaque voie de mesure 12 sont disposées du côté droit de l'aéronef et les autres Pm/2 sondes 21 de cette même voie de mesure 12 sont disposées du côté gauche.

En outre, avantageusement, les sondes 21 au sein d'une même voie de mesure 12 sont toutes d'une même nature. Autrement dit, ces sondes 21 permettent de mesurer une même grandeur physique. Il est considéré en outre par la suite, sans perte de généralité, que les sondes 21 appartenant à des voies différentes permettent également de mesurer une même grandeur physique.

Dans l'exemple de la figure 1, deux voies de mesure 12 comprenant chacune deux sondes 21 sont représentées. Autrement dit, dans un tel cas, le nombre N est égal à 2 et chaque nombre Pm (m=1 ou 2) est égal à 2. En outre, les sondes 21 de chaque voie de mesure 12 sont disposées de côtés différents de l'aéronef, à savoir du côté droit et du côté gauche. Ainsi, dans l'exemple de la figure 1, chaque voie de mesure 12 comprend une sonde gauche et une sonde droite.

Selon un autre exemple, l'architecture 10 comprend N voies de mesure 12 et les différentes voies de mesure comprennent un nombre différent de sondes. Par exemple, dans un tel cas, P1=2, P2=3, P3=1, ..., PN=4.

Les sondes 21 sont connectées au dispositif de traitement 14 et sont configurées pour fournir les mesures aérodynamiques correspondantes à ce dispositif 14.

Le dispositif de traitement 14 permet de recevoir l'ensemble des mesures aérodynamiques générées par les voies de mesure 12 et de les traiter de manière appropriée, afin de fournir un résultat d'un tel traitement à tout système intéressé. Un tel système intéressé peut par exemple comprendre une interface de communication homme/machine, un système de pilotage (par exemple un pilote automatique), un système de planification de vol (par exemple de type FMS, de l'anglais « Fligth Management System »), etc. En outre, le dispositif de traitement 14 permet de traiter chaque mesure aérodynamique reçue, conformément à la voie de mesure ayant généré cette mesure.

En particulier, le dispositif de traitement 14 peut comprendre un calculateur séparé pour chaque voie de mesure 12 pour mettre en œuvre un traitement indépendant des mesures aérodynamiques provenant des voies de mesure 12 indépendantes. Le dispositif de traitement 14 peut notamment comprendre un calculateur de type « Air Data Computer » connu en soi.

Le dispositif de validation 16 selon l'invention permet de valider/invalider chaque mesure aérodynamique provenant de chaque sonde 21. Ce dispositif de validation 16 est par exemple connecté entre chaque sonde 21 et le dispositif de traitement 14.

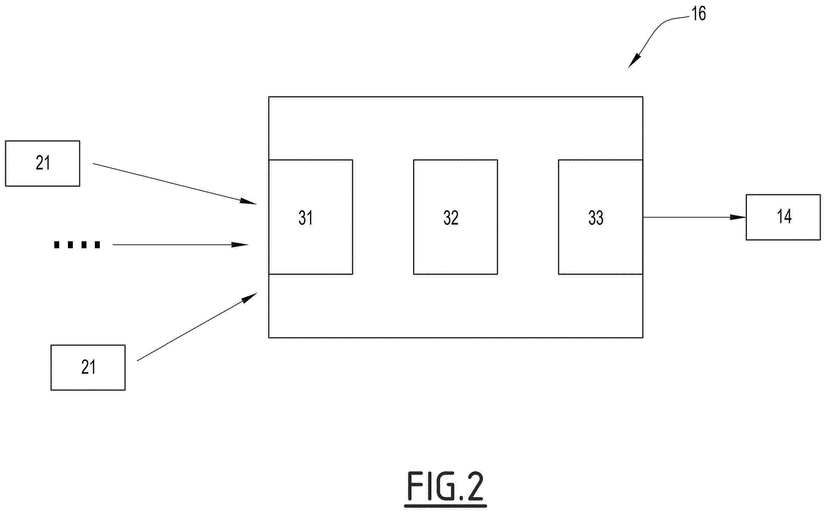

Le dispositif de validation 14 est illustré plus en détail sur la figure 2.

En référence à cette figure 2, le dispositif de validation 14 comprend notamment un module d'entrée 31, un module de traitement 32 et un module de sortie 33.

Le module d'entrée 31 est connecté à l'ensemble des sondes 21 et permet de recevoir chaque mesure aérodynamique issue de chaque sonde 21.

Le module de traitement 32 permet de traiter l'ensemble des mesures aérodynamiques pour valider ou invalider chacune d'entre elles, comme cela sera expliqué plus détail par la suite.

En outre, le module de traitement 32 permet de transmettre chaque mesure aérodynamique validée au module de sortie 33.

Le module de sortie 33 permet de transmettre chaque mesure aérodynamique validée par le module de traitement 32 à tout système externe intéressé et notamment au dispositif de traitement 14 tel qu'expliqué précédemment.

Chacun de ces modules 31 à 33 est réalisé par exemple au moins partialement sous la forme d'un logiciel.

Dans un tel cas, le dispositif de validation 14 comprend en outre une mémoire permettant de stocker un tel logiciel ainsi qu'un processeur permettant d'exécuter ce logiciel.

Alternativement ou en complément, au moins un de ces modules 31 à 33 présente au moins partialement un circuit logique programmable tel qu'un circuit FPGA (de l'anglais « Field-Programmable Gate Array »).

D'autres modes de réalisation du dispositif de validation 16 sont également possibles. Ainsi, par exemple, ce dispositif de validation 16 peut comprendre une chaine de traitement pour chaque voie de mesure permettant de traiter les mesures aérodynamiques issues de cette voie de mesure de manière séparée et une zone partagée permettant d'analyser et de comparer des mesures aérodynamiques issues de voies de mesure différentes.

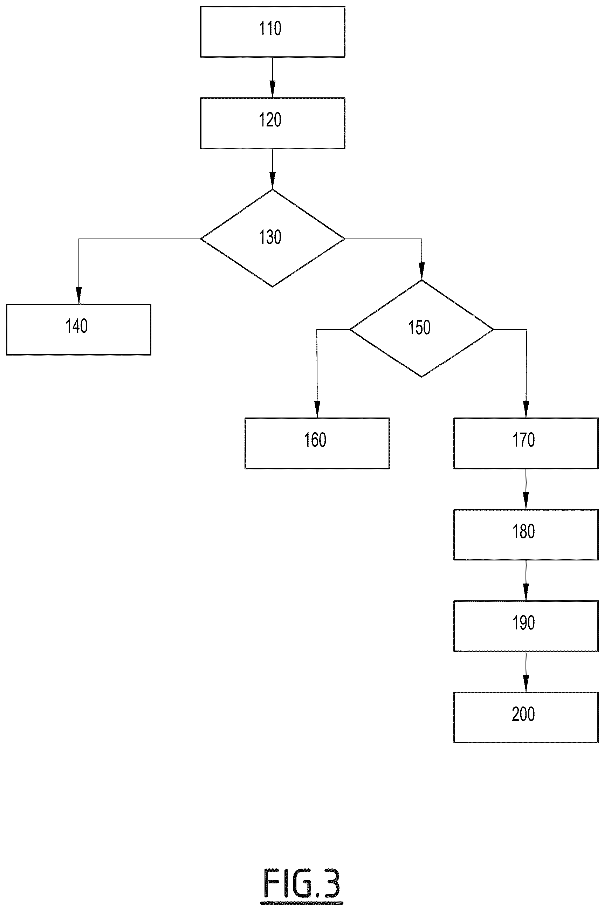

Le dispositif de validation 16 permet de mettre en œuvre un procédé de validation de mesures aérodynamiques qui sera désormais expliqué en référence à la figure 3 présentant un organigramme de ses étapes.

Initialement, il est considéré que chaque sonde 21 génère une mesure aérodynamique et la transmet au dispositif de validation 16. Une telle mesure sera appelée par la suite mesure élémentaire.

Lors d'une étape 110 initiale du procédé, le module d'entrée 31 acquiert chaque mesure élémentaire et la transmet au module de traitement 32. Ainsi, pour chaque voie de mesure, Pm mesures élémentaires sont transmises au module de traitement 32.

Dans l'exemple de la figure 1, quatre mesures élémentaires à savoir Ps1_l, Ps1_r, Ps2_l et Ps2_r correspondant aux mesures générées respectivement par la sonde gauche de la première voie, la sonde droite de la première voie, la sonde gauche de la deuxième voie et la sonde droite de la deuxième voie sont alors générées.

Lors d'une étape 120 suivante, pour chaque voie de mesure 12, le module de traitement 32 détermine une mesure résultante à partir de l'ensemble des mesures élémentaires issues des sondes 21 appartenant à cette voie de mesure 12.

La mesure résultante pour chaque voie de mesure est calculée par exemple en utilisant une même fonction F sur l'ensemble des mesures élémentaires correspondant à cette voie. Cette fonction F peut correspondre par exemple à une moyenne ou à toute autre fonction connue en soi pour calcul d'une valeur résultante à partir d'une pluralité d'échantillons.

Autrement dit, lors de cette étape, N mesures résultantes sont calculées.

Dans l'exemple de la figure 1, lors de cette étape 120, deux mesures résultantes, à savoir les mesures Ps1 et Ps2 correspondant respectivement aux moyennes des valeurs Ps1_l et Ps1_r, et Ps2_l et Ps2_r sont déterminées.

Lors d'une étape 130 suivante, le module de traitement 32 compare l'ensemble des mesures résultantes entre elles afin de déterminer leur cohérence. Pour cela, une fonction spécifique, connue en soi, peut être utilisée. Par exemple, deux mesures résultantes peuvent être considérées cohérentes lorsque l'écart entre ces mesures est inférieur à un seuil prédéterminé. Autrement, ces mesures sont incohérentes.

L'analyse de cohérence peut s'effectuer par exemple en comparant les mesures deux par deux.

Ainsi, lorsque N>2, le module de traitement 32 peut déterminer une mesure résultante incohérente lorsqu'elle est incohérente avec chaque autre mesure résultante étant donné que ces autres mesures résultantes sont cohérentes entre elles.

Lorsque N=2, le module de traitement 32 conclut que lorsque les deux mesures résultantes sont suffisamment différentes, chacune de ces mesures résultantes est incohérente.

Dans l'exemple de la figure 1, les mesures Ps1 et Ps2 peuvent être cohérentes lorsque leur différence est inférieure à un seuil.

Lorsque suite à la mise en œuvre de l'analyse de cohérence, le module de traitement 32 conclut que l'ensemble des mesures résultantes sont cohérentes entre elles, lors de l'étape 140 suivante, il valide l'ensemble des mesures élémentaires (ou des mesures résultantes) et les transmet au module de sortie 33. Ce module de sortie 33 transmet à son tour ces mesures au dispositif de traitement 14.

Lorsqu'au contraire, le module de traitement 32 détermine une mesure résultante incohérente par rapport aux autres, il procède à l'exécution de l'étape 150 et des étapes suivantes en relation avec cette mesure. Il est considéré ensuite que la mesure incohérente est issue de la voie de mesure ayant l'indice k.

Lors de l'étape 150 suivante, le module de traitement 32 tente d'abord d'analyser la cohérence des mesures élémentaires entre elles au sein de la voie de mesure k.

Lorsque cela est possible (notamment lorsque Pk>2), le module de traitement 32 détermine la sonde ayant l'indice j qui fournit la mesure élémentaire causant l'incohérence et exclut de toute considération toute mesure élémentaire provenant de la sonde j. Puis, lors de l'étape 160 suivante, le module de traitement 32 valide l'ensemble des mesures élémentaires à l'exception de celle provenant de la sonde j et les transmet au module de sortie 33. Ce module de sortie 33 transmet à son tour ces mesures au dispositif de traitement 14.

Lorsque cela n'est pas possible (notamment lorsque Pk≤2), le module de traitement 32 passe à l'exécution d'une étape 170 suivante.

Lors de l'étape 170, le module de traitement 32 sélectionne une voie de mesure i, différente de la voie de mesure k, dont le nombre de sondes Pi est égal à au moins 2.

Lors d'une étape 180 suivante, le module de traitement 32 détermine Pi+Pk valeurs de cohérence.

Chaque valeur de cohérence correspond à la valeur d'une fonction de cohérence calculée sur un sous-ensemble de mesures élémentaires des voies i et k excluant la mesure élémentaire relative à l'une des sondes appartenant à l'une des voies. Ainsi, chaque valeur de cohérence est déterminée à partir de Pi+Pk-1 mesures élémentaires et est associée à la sonde 21 dont la mesure élémentaire a été exclue pour son calcul.

Selon un mode réalisation particulier, la fonction de cohérence est définie préalablement en fonction d'au moins un paramètre choisi dans le groupe comprenant :
- vitesse de l'aéronef ;
- forme de l'aéronef ;
- configuration aérodynamique de l'aéronef ;
- placement des sondes correspondantes ;
- nature des sondes correspondantes.

Par exemple, la fonction de cohérence peut être définie en fonction des lois SSEC (de l'anglais « Static Source Error Correction ») des sondes correspondantes. Ces lois SSEC peuvent être définies lors des essais en vol dédiés.

Dans l'exemple de la figure 1, une valeur de cohérence est déterminée pour chaque sous-ensemble de trois mesures élémentaires.

Autrement dit, les valeurs de cohérence suivantes sont déterminées :
F³(Ps1_l,Ps1_r,Ps2_l) = Ps1_3_inf
F³(Ps1_l,Ps1_r,Ps2_r) = Ps2_3_inf
F³(Ps2_l,Ps2_r,Ps1_l) = Ps3_3_inf
F³(Ps2_l,Ps2_r,Ps1_r) = Ps4_3_inf
où F³(...) est la fonction de cohérence applicable dans cet exemple.

Lors d'une étape 190 suivante, le module de traitement 32 détermine parmi l'ensemble des valeurs de cohérence une valeur incohérente avec les autres valeurs de cohérence. Autrement dit, il s'agit d'une valeur incohérente par rapport aux Pi+Pk-2 autres valeurs.

En particulier, pour déterminer une telle valeur incohérente, le module de traitement 32 analyse l'ensemble des valeurs de cohérence et choisit parmi ces valeurs la valeur qui diffère le plus des autres. Différentes techniques connues en soi peuvent être utilisées à cet effet. Par exemple, la valeur incohérente peut être plus proche de la mesure résultante fournie par l'une des voies de mesure autre que la voie de mesure k que les autres valeurs de cohérence. Dans ce contexte, la valeur incohérente peut correspondre à une valeur mesurée non-erronée alors que toutes les autres valeurs de cohérence peuvent correspondre à une mesure erronée.

Puis, le module de traitement 32 détermine la sonde j correspondant à cette valeur incohérente. Autrement dit, le module de traitement 32 détermine la sonde j dont la mesure élémentaire a été exclue du calcul de la valeur incohérente.

Dans l'exemple de la figure 1, la valeur de cohérence Ps1_3_inf peut être plus proche de la valeur Ps1 que les autres valeurs de cohérence Ps2_3_inf, Ps3_3_inf et Ps4_3_inf. De ce fait, la valeur de cohérence Ps1_3_inf peut correspondre à une mesure non-erronée alors que les autres valeurs de cohérence Ps2_3_inf, Ps3_3_inf et Ps4_3_inf peuvent correspondre à une mesure erronée. Dans un tel cas, lors de cette étape 190, la valeur Ps1_3_inf est considérée comme la valeur incohérente.

Lors de l'étape 200 suivante, le module de traitement 32 valide l'ensemble des mesures élémentaires à l'exception de celle provenant de la sonde j et les transmet au module de sortie 33. Ce module de sortie 33 transmet à son tour ces mesures au dispositif de traitement 14.

Selon un mode de réalisation, le module de traitement 32 peut appliquer encore d'autres techniques pour valider/invalider une mesure élémentaire. Ces techniques peuvent être applicables lorsque par exemple deux sondes se trouvent défaillantes. Ces techniques peuvent comprendre l'utilisation de l'information de lacet (voire d'autres informations des Commmandes de Vol Electriques - CDVE) combinée avec le contrôle de cohérence. Ce fonctionnement est facilité si la fonction Air Data est hébergée dans une partition du calculateur CDVE ou IRS (Système de référence inertiel).

On conçoit alors que la présente invention présente un certain nombre d'avantages. En particulier, il est clair que l'invention permet de réduire le nombre de voies de mesure nécessaires pour fonctionner avec un système critique. En particulier, deux voies de mesure comprenant chacune deux sondes peuvent être suffisantes pour fonctionner avec un système critique. Bien entendu, il reste possible d'augmenter le nombre de voies de mesure et/ou de sondes pour augmenter davantage la fiabilité/disponibilité de l'architecture.

## Revendications

1. Procédé de validation de mesures aérodynamiques mis en œuvre par une architecture de mesure aéronautique (10) embarquée au moins partiellement dans un aéronef et comprenant N voies de mesure (12) séparées, chaque voie de mesure (12) comprenant Pm sondes (21), l'indice m variant de 1 à **N,** le procédé comprenant les étapes suivantes :
- acquisition (110) d'une mesure élémentaire de chaque sonde (21) ;
- pour chaque voie de mesure (12), détermination (120) d'une mesure résultante à partir des mesures élémentaires des sondes (21) appartenant à cette voie de mesure (12) ;
- comparaison (130) des mesures résultantes entre elles :
+ lorsque les mesures résultantes sont cohérentes entre elles, validation (140) de l'ensemble des mesures élémentaires ;
+ lorsqu'une mesure résultante relative à la voie k est incohérente avec les autres mesures résultantes :
- sélection (170) d'une voie mesure i dont le nombre de sondes Pi est égal à au moins 2 ;
- détermination (180) de Pi+Pk valeurs de cohérence, chaque valeur de cohérence étant déterminée par une fonction de cohérence sur un sous-ensemble de mesures élémentaires des sondes (21) des voies i et k excluant la mesure élémentaire relative à l'une des sondes (21) appartenant à l'une des voies (12) ;
- détermination (190) d'une valeur incohérente parmi l'ensemble des valeurs de cohérence, ladite valeur incohérente étant calculée sur le sous-ensemble de mesures élémentaires excluant la mesure élémentaire relative à la sonde j ;
- invalidation (200) de toute mesure élémentaire issue de la sonde j.

2. Procédé selon la revendication 1, comprenant en outre une étape d'analyse (150) de cohérence des mesures élémentaires entre elles, issues des sondes (21) de la voie k lorsque le nombre de sondes Pk dans cette voie k est strictement supérieur à 2.

3. Procédé selon l'une quelconque des revendications précédentes, dans lequel la fonction de cohérence est définie préalablement en fonction d'au moins un paramètre choisi dans le groupe comprenant :
- vitesse de l'aéronef ;
- forme de l'aéronef ;
- configuration aérodynamique de l'aéronef ;
- placement des sondes correspondantes ;
- nature des sondes correspondantes.

4. Procédé selon l'une quelconque des revendications précédentes, dans lequel les sondes (21) d'une même voie de mesure (12) sont disposées de côtés différents de l'aéronef.

5. Procédé selon la revendication 4, dans lequel chaque voie de mesure m comprend Pm/2 sondes disposées d'un côté de l'aéronef et Pm/2 sondes disposées de l'autre côté de l'aéronef.

6. Procédé selon l'une quelconque des revendications précédentes, dans lequel chaque sonde (21) est une sonde de pression statique.

7. Procédé selon la revendication 6, dans lequel la fonction de cohérence est définie en fonction des lois SSEC (de l'anglais « Static Source Error Correction ») des sondes correspondantes.

8. Procédé selon l'une quelconque des revendications précédentes, dans lequel l'ensemble des sondes (21) sont de même nature.

9. Procédé selon l'une quelconque des revendications précédentes, dans lequel N=2 et Pm=2 pour tout indice m.

10. Dispositif de validation (16) de mesures aérodynamiques comprenant des moyens techniques (31, 32, 33) configurés pour mettre en œuvre le procédé selon l'une quelconque des revendications précédentes.
